# FASCICULE DE BREVET EUROPEEN

(11) **EP 1 699 645 B1**
(45) Date de publication et mention de la délivrance du brevet: **26.08.2009**
(21) Numéro de dépôt: 04803958.0
(22) Date de dépôt: 16.12.2004
(51) Int. Cl.: B60C 9/08

(54) **PNEUMATIQUE POUR VEHICULES**
FAHRZEUGREIFEN
VEHICLE TYRE

(30) Priorité: 24.12.2003 FR 0315483
(43) Date de publication de la demande: 13.09.2006
(73) Titulaire: Société de Technologie Michelin, 63000 Clermont-Ferrand (FR); Michelin Recherche et Technique S.A., 1763 Granges-Paccot (CH)
(72) Inventeur: PROST, Pascal, F-63200 Riom (FR); VALLE, Alain, F-63118 Cebazat (FR)
(74) Mandataire: Le Cam, Stéphane Georges Elie
(86) Numéro de dépôt international: PCT/EP2004/014345
(87) Numéro de publication internationale: WO 2005/070704

(56) Documents cités:
- DE-A1- 3 621 646
- US-A- 3 327 753
- US-A- 5 618 362
- PATENT ABSTRACTS OF JAPAN vol. 1999, no. 12, 29 octobre 1999 (1999-10-29) -& JP 11 198616 A (BRIDGESTONE CORP), 27 juillet 1999 (1999-07-27)

## Description

La présente invention concerne un pneumatique destiné à équiper un véhicule et plus particulièrement destiné à équiper un véhicule à deux roues tel qu'une motocyclette.

Bien que non limité à une telle application, l'invention sera plus particulièrement décrite en référence à un tel pneumatique de motocyclette, ou moto.

L'armature de renforcement ou renforcement des pneumatiques et notamment des pneumatiques de motocyclette est à l'heure actuelle - et le plus souvent - constituée par empilage d'une ou plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisée pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les éléments de renforcement des différentes structures de renfort sont appliqués directement sur les couches adjacentes de mélanges caoutchouteux, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «tringle». Les produits de base, tels que les mélanges caoutchouteux et les éléments de renforcement sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, les pneumatiques décrits dans ce document ne disposent pas du "traditionnel" retournement de nappe carcasse autour d'une tringle. Ce type d'ancrage est remplacé par un agencement dans lequel on dispose de façon adjacente à ladite structure de renfort de flanc des fils circonférentiels, le tout étant noyé dans un mélange caoutchouteux d'ancrage ou de liaison.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-finis pour réaliser certains aspects architecturaux (tels que des nappes, tringles, etc), tandis que d'autres sont réalisés à partir de l'application directe de mélanges et/ou d'élément de renforcement.

Dans le présent document, afin de tenir compte des évolutions technologiques récentes tant dans le domaine de la fabrication que pour la conception de produits, les termes classiques tels que «nappes», «tringles», etc, sont avantageusement remplacés par des termes neutres ou indépendants du type de procédé utilisé. Ainsi, le terme «renfort de type carcasse» ou «renfort de flanc» est valable pour désigner les éléments de renforcement d'une nappe carcasse dans le procédé classique, et les éléments de renforcement correspondants, en général appliqués au niveau des flancs, d'un pneumatique produit selon un procédé sans semi-finis. Le terme «zone d'ancrage», pour sa part, peut désigner tout autant le "traditionnel" retournement de nappe carcasse autour d'une tringle d'un procédé classique, que l'ensemble formé par les éléments de renforcement circonférentiels, le mélange caoutchouteux et les portions adjacentes de renfort de flanc d'une zone basse réalisée avec un procédé avec application sur un noyau toroïdal.

Comme dans le cas de tous les autres pneumatiques, on assiste à une radialisation des pneumatiques pour motos, l'architecture de tels pneumatiques comprenant une armature de carcasse formée d'une ou deux couches d'éléments de renforcement faisant avec la direction circonférentielle un angle pouvant être compris entre 65° et 90°, ladite armature de carcasse étant radialement surmontée d'une armature de sommet formée au moins d'éléments de renforcement généralement textiles. Il subsiste toutefois des pneumatiques non radiaux auquel se rapporte également l'invention. L'invention se rapporte encore à des pneumatiques partiellement radiaux, c'est-à-dire dont les éléments de renforcement de l'armature de carcasse sont radiaux sur au moins une partie de ladite armature de carcasse, par exemple dans la partie correspondant au sommet du pneumatique.

De nombreuses architectures d'armature de sommet ont été proposées, selon que le pneumatique sera destiné à la monte à l'avant de la moto ou à la monte à l'arrière. Une première structure consiste, pour ladite armature de sommet, à employer uniquement des câbles circonférentiels, et ladite structure est plus particulièrement employée pour la position arrière. Une deuxième structure, directement inspirée des structures couramment employées en pneumatiques pour véhicules de Tourisme, a été utilisée pour améliorer la résistance à l'usure, et consiste dans l'utilisation d'au moins deux couches de sommet d'éléments de renforcement parallèles entre eux dans chaque couche mais croisés d'une couche à la suivante en faisant avec la direction circonférentielle des angles aigus, de tels pneumatiques étant plus particulièrement adaptés pour l'avant des motos. Les dites deux couches de sommet peuvent être associées à au moins une couche d'éléments circonférentiels, généralement obtenus par enroulement hélicoïdal d'une bandelette d'au moins un élément de renforcement enrobé de caoutchouc.

Le brevet FR 2 561 588 décrit ainsi une telle armature de sommet, avec au moins une nappe dont les éléments de renforcement font avec la direction circonférentielle un angle pouvant varier entre 0° et 8°, le module d'élasticité de tels éléments s'élevant à au moins 6000 N/mm², et, disposée entre l'armature de carcasse et la nappe d'éléments circonférentiels, d'une couche d'amortissement formée principalement de deux nappes d'éléments croisés d'une nappe à la suivante en faisant entre eux des angles compris entre 60° et 90°, les dites nappes croisées étant formées d'éléments de renforcement textiles ayant un module d'élasticité d'au moins 6000 N/mm².

Le document EP 0 456 933, en vue de conférer à un pneumatique pour moto une excellente stabilité à grande vitesse ainsi qu'une excellente propriété de contact avec le sol, enseigne par exemple de constituer une armature de sommet avec au moins deux nappes : une première nappe, radialement la plus proche de l'armature de carcasse étant composée de câbles orientés avec un angle compris entre 40° et 90° par rapport à la direction circonférentielle et la deuxième nappe, la plus proche radialement de la bande de roulement étant composée de câbles enroulés hélicoïdalement dans la direction circonférentielle.

Le brevet US 5 301 730, en vue d'augmenter la motricité d'un pneumatique pour position arrière d'une moto, propose une armature de sommet composée, en allant de l'armature de carcasse radiale à la bande de roulement, d'au moins une nappe d'éléments sensiblement circonférentiels et de deux nappes d'éléments croisés d'une nappe à la suivante en faisant avec la direction circonférentielle un angle pouvant être compris entre 35° et 55°, la nappe d'éléments parallèles à la direction circonférentielle pouvant être formée d'éléments en polyamide aromatique, et les nappes d'éléments croisés en polyamide aliphatique.

Le document US 3,327,753 décrit un pneumatique pouvant comporter une nappe de travail mise en place radialement à l'intérieur de la carcasse.

Le document US 5,618,362 décrit dans sa figure 3 des éléments de renforcement d'une nappe de travail réalisés à partir d'un fil continu et formant une structure en zigzag, deux tronçons adjacents étant reliés par une boucle et présentant des angles formés avec la direction circonférentielle opposés.

L'invention a pour but de réaliser des pneumatiques pour motocyclette, dont la structure de renforcement de sommet ne comporte pas d'éléments de renforcement orientés circonférentiellement et comporte au moins une couche d'éléments de renforcement de travail, à des coûts inférieurs à ceux actuellement obtenus, sans nuire pour autant aux propriétés, nécessaires à la satisfaction des utilisateurs et en renforçant les propriétés d'adhérence et de motricité des pneumatiques pour une utilisation en fort carrossage.

Ce but a été atteint selon l'invention par un pneumatique comportant une structure de renfort de type carcasse continue, formée d'éléments de renforcement, ancrée de chaque côté du pneumatique à un bourrelet dont la base est destinée à être montée sur un siège de jante, chaque bourrelet se prolongeant radialement vers l'extérieur par un flanc, les flancs rejoignant radialement vers l'extérieur une bande de roulement, et comportant sous la bande de roulement une structure de renforcement de sommet constituée d'au moins une couche d'éléments de renforcement dite couche de travail, ladite structure de renforcement de sommet ne comportant pas d'éléments de renforcement orientés circonférentiellement, et selon le profil du pneumatique dans un plan radial, dans sa partie radialement extérieure aux deux points de tangence de l'abscisse curviligne de la structure de renfort de type carcasse avec des perpendiculaires à l'axe de rotation au moins une couche d'éléments de renforcement de travail étant au moins partiellement radialement intérieure à la partie de la structure de renfort de type carcasse, radialement extérieure aux deux points de tangence de l'abscisse curviligne de ladite structure de renfort de type carcasse avec des perpendiculaires à l'axe de rotation, au moins une couche d'éléments de renforcement de travail étant constituée d'au moins un fil continu de renforcement formant dans la zone centrale de ladite couche des tronçons présentant des angles, formés avec la direction longitudinale, identiques, lesdits angles étant mesurés aux points d'intersections avec un plan circonférentiel, deux tronçons adjacents étant liés par une boucle ou coude formé par ledit fil, et les tronçons formant un angle avec la direction longitudinale compris entre 10 et 80°.

La direction longitudinale du pneumatique, ou direction circonférentielle, est la direction correspondant à la périphérie du pneumatique et définie par la direction de roulement du pneumatique.

Un plan circonférentiel ou plan circonférentiel de coupe est un plan perpendiculaire à l'axe de rotation du pneumatique. Le plan équatorial est le plan circonférentiel passant par le centre ou sommet de la bande de roulement.

La direction transversale ou axiale du pneumatique est parallèle à l'axe de rotation du pneumatique.

Un plan radial contient l'axe de rotation du pneumatique.

Au sens de la présente invention, une nappe de travail présente une abscisse curviligne comprise entre les deux points de tangence de l'abscisse curviligne de la structure de renfort de type carcasse avec des perpendiculaires à l'axe de rotation ; la largeur axiale d'une nappe de travail est ainsi inférieure à la distance axiale entre ces deux points de tangence de l'abscisse curviligne de la structure de renfort de type carcasse avec des perpendiculaires à l'axe de rotation.

Au sens de l'invention, une structure de renfort de type carcasse continue est formée d'éléments de renforcement continus d'un bourrelet à l'autre.

La zone centrale d'une couche de travail est une zone circonférentielle de ladite couche axialement comprise entre deux zones latérales, axialement extérieures à ladite zone centrale. Cette zone centrale est selon une réalisation préférée de l'invention centrée sur le sommet de la bande de roulement du pneumatique.

Le terme « fil » désigne en toute généralité, aussi bien des mono-filaments, des fibres multifilamentaires (éventuellement tordues sur elles-mêmes) ou des assemblages comme des câbles textiles ou métalliques, des retors ou bien encore n'importe quel type d'assemblage équivalent comme par exemple un câble hybride, et ceci, quelle que soient la ou les matières, le traitement éventuel de ces fils, par exemple un traitement de surface ou enrobage, ou préencollage, pour favoriser l'adhésion sur le caoutchouc ou toute autre matière.

Le pneumatique selon l'invention autorise un gain économique de deux ordres. Tout d'abord, la quantité de matière utilisée pour réaliser une couche d'éléments de renforcement de travail est diminuée par rapport à un pneumatique usuel, de mêmes dimensions, du fait de la position radialement intérieure d'au moins une partie d'une couche d'éléments de renforcement de travail par rapport à la structure de renfort de type carcasse. Et, en conséquence, le temps de fabrication de ladite couche d'éléments de renforcement de travail peut être inférieur à celui nécessaire pour la réalisation de la couche d'un pneumatique usuel, notamment dans le cas d'une réalisation sur noyau dur.

En outre, un pneumatique selon l'invention ainsi réalisé comporte une structure de renforcement qui ne présente aucune extrémité libre des éléments de renforcement au niveau des bords axialement extérieurs des couches de travail.

Selon l'invention, la couche de travail est réalisée avec au moins un fil dont aucune extrémité libre n'est présente sur les bords de ladite couche. De préférence, la réalisation de la couche est faite avec un seul fil et la couche est du type « mono-fil ». Toutefois, la réalisation industrielle de telles couches conduit à des discontinuités notamment dues à des changements de bobine. Une réalisation préférée de l'invention consiste encore à n'utiliser qu'un seul ou un faible nombre de fils pour une couche de travail et il convient de disposer les débuts et fins de fils dans la zone centrale de ladite couche.

Les études réalisées ont notamment mis en évidence que la présence de couches usuelles d'éléments de renforcement présentant un angle avec la direction longitudinale conduit à des rigidités locales, circonférentielles et de cisaillement, qui diminuent à l'approche des bords desdites couches, la tension aux extrémités des éléments de renforcement étant nulle. Une tension locale nulle des éléments de renforcement se traduit par une moindre efficacité desdits éléments de renforcement dans cette zone. Or, les rigidités des bords des couches sont particulièrement importantes lorsque le pneumatique est utilisé dans les plus forts carrossages, en courbe, la partie du pneumatique correspondant à ces zones se trouvant alors en regard du sol.

La réalisation de pneumatiques pour motocyclettes conduit à des valeurs de courbures importantes pour une utilisation desdits pneumatiques en carrossage. Un pneumatique réalisé selon cette variante de l'invention et qui comporte une structure de renforcement qui ne présente aucune extrémité libre des éléments de renforcement au niveau des bords axialement extérieurs des couches de travail, permet ainsi notamment de renforcer les propriétés d'adhérence et de motricité des pneumatiques pour une utilisation en fort carrossage.

Dans la zone centrale des couches de travail, c'est-à-dire dans la partie des couches de travail qui n'englobe pas les boucles liant les tronçons entre eux, les tronçons présentent des angles, formés avec la direction longitudinale, identiques, lesdits angles étant mesurés aux points d'intersections avec un plan circonférentiel, quel que soit ledit plan circonférentiel. En d'autres termes, pour un plan circonférentiel de coupe donné, les tronçons présentent tous le même angle formé avec la direction longitudinale aux points d'intersections avec ledit plan circonférentiel de coupe. Par ailleurs, l'angle précité peut varier selon le plan circonférentiel de coupe considéré.

Selon une réalisation préférée précédemment citée, dans la zone centrale des couches de travail, les tronçons sont équidistants les uns des autres dans des plans circonférentiels de coupe ; la distance séparant des tronçons adjacents pouvant quant à elle varier selon le plan circonférentiel de coupe considéré, ou plus précisément, la distance entre des tronçons adjacents pouvant varier selon la direction axiale.

D'autres réalisations avantageuses de l'invention prévoient encore que des motifs de tronçons sont équidistants les uns des autres selon tous plans circonférentiels. Par motif de tronçons, on entend un ensemble de plusieurs tronçons disposé selon une configuration donnée et qui est reproduit.

Un tel pneumatique qui est avantageusement réalisé selon une technique du type sur noyau dur ou toroïdal autorise notamment la mise en place des éléments de renforcement dans la position quasi-finale ; en effet, une étape de conformation n'étant pas requise selon ce type de procédé les éléments de renforcement ne sont plus déplacés après leur mise en place. Si une technique comportant une étape de mise en forme, telle qu'une conformation ou l'application d'une nappe plane sur le profil du pneumatique, est utilisée, la courbure d'un pneu moto nécessite de préparer une nappe particulière pour pouvoir obtenir des tronçons, présentant des angles identiques et éventuellement équidistants les uns des autres selon tous plans circonférentiels, liés par une boucle ; notamment aux extrémités de la nappe et donc au niveau des boucles, la conformation selon la courbure d'un pneumatique pour motocyclette conduit à des variations notamment sur les bords du pneumatique qui modifient la position des éléments de renforcement. Cette modification des positions est en outre perturbée par la présence des boucles qui entraînent des modifications non homogènes. De ce fait, les différents tronçons ne présentent pas des angles, formés avec la direction longitudinale, identiques dans des plans circonférentiels de coupe. De même, ils ne sont pas équidistants les uns des autres dans des plans circonférentiels de coupe.

Dans une réalisation avantageuse de l'invention, notamment pour optimiser les rigidités de la structure de renforcement le long du méridien du pneumatique, et en particulier aux bords des couches de travail, les angles formés par lesdits tronçons du fil des couches de travail avec la direction longitudinale sont variables selon la direction transversale tels que lesdits angles sont supérieurs sur les bords axialement extérieurs des couches d'éléments de renforcement par rapport aux angles desdits tronçons mesurés au niveau du plan équatorial du pneumatique.

L'utilisation d'une technique du type sur noyau dur qui autorise notamment la mise en place des éléments de renforcement dans la position quasi-finale sans nécessiter d'étape de conformation présente encore des avantages. En effet, une technique du type sur noyau dur autorise notamment de manière simple des variations d'angles nettement supérieures à ce qu'il est possible d'obtenir selon des procédés comportant une étape de conformation. En outre, lesdites variations d'angle, ledit angle tendant vers 90° aux bords des couches de travail, conduit à une augmentation du pas et favorise la réalisation des boucles, du fait de la réduction de l'encombrement.

Un premier mode de réalisation des variantes de réalisation de l'invention selon lesquelles les angles formés par lesdits tronçons du fil des couches de travail avec la direction longitudinale sont variables selon la direction transversale, consiste à faire varier l'angle des tronçons d'une manière monotone depuis le plan équatorial du pneumatique jusqu'aux bords de la couche de travail.

Un second mode de réalisation de ces variantes consiste à faire évoluer l'angle par palier depuis le plan équatorial du pneumatique jusqu'aux bords de la couche de travail.

Un dernier mode de réalisation de ces variantes consiste en une évolution de l'angle telle que des valeurs données soient obtenues pour des positions axiales données.

Ces différents modes de réalisation des variantes de réalisation de l'invention selon lesquelles les angles formés par lesdits tronçons du fil des couches de travail avec la direction longitudinale sont variables selon la direction transversale permettent en d'autres termes, d'obtenir une forte rigidité circonférentielle de la structure de renforcement du sommet par la présence d'angles fermés, c'est-à-dire faibles, dans la zone du sommet du pneu, c'est-à-dire dans la zone encadrant le plan équatorial. Et au contraire la présence d'angles ouverts, c'est-à-dire d'angles tendant vers 45°, voir au-delà vers 90°, peut être obtenue sur les bords de la couche de travail ou plus exactement au niveau des épaules du pneumatique pour améliorer l'adhérence, la motricité, le confort, ou encore la température de fonctionnement du pneumatique ; en effet, de telles variations d'angles permettent de moduler les rigidités de cisaillement des couches de travail.

Avantageusement, dans le cas d'une structure radiale, les éléments de renforcement de la structure de renfort de type carcasse font avec la direction circonférentielle un angle compris entre 65° et 90°.

Selon des réalisations préférées de l'invention, les tronçons forment un angle avec la direction longitudinale compris entre 20 et 75°. De préférence, l'angle est inférieur à 50° et de préférence encore inférieur à 40°.

Selon une réalisation préférée de l'invention, la structure de renforcement de sommet du pneumatique comporte au moins deux couches d'éléments de renforcement telles que d'une couche à la suivante les tronçons forment entre eux des angles compris entre 20 et 160° et de préférence entre 40 et 100°.

Selon une réalisation préférée de l'invention, les éléments de renforcement des couches de travail sont en matériau textile.

Selon un autre mode de réalisation de l'invention, les éléments de renforcement des couches de travail sont en métal.

Selon l'invention lorsque le pneumatique comporte au moins deux couches de renfort de type carcasse, au moins une couche d'éléments de renforcement de travail est positionnée au moins partiellement radialement à l'intérieur d'au moins deux couches de renfort de type carcasse.

Un pneumatique selon l'invention, comportant au moins une partie de la structure de renforcement de sommet réalisée radialement à l'intérieur de la structure de renfort de type carcasse, est ainsi avantageusement réalisé selon une technique de fabrication du type sur noyau dur ou forme rigide.

Selon un premier mode de réalisation de l'invention, la structure de renforcement de sommet est intégralement réalisée radialement à l'intérieur d'au moins une structure de carcasse, c'est-à-dire à l'intérieur d'au moins une couche de carcasse. Au moins une structure de renfort de type carcasse couvre ainsi radialement la structure complète de renforcement de sommet.

Selon un second mode de réalisation préféré de l'invention, au moins une couche d'éléments de renforcement de travail de la structure de renforcement de sommet est réalisée radialement à l'extérieur de la structure de renfort de type carcasse. Selon ce second mode de réalisation de l'invention, la couche d'éléments de renforcement de travail assume une fonction de protection à l'égard de la carcasse et des autres couches de la structure de renforcement de sommet, contre des agressions mécaniques éventuelles.

Dans une variante avantageuse de l'invention, une couche d'éléments de renforcement de travail peut être réalisée en plusieurs parties mises en place en différentes positions radiales ou différents niveaux du pneumatique. Un tel pneumatique peut notamment comporter une partie de la couche d'éléments de renforcement de travail radialement à l'extérieur des éléments de renforcement de la structure de carcasse dans la partie centrale du pneumatique, c'est-à-dire sous la partie centrale de la bande de roulement. Cette partie de la couche d'éléments de renforcement de travail permet alors notamment une protection de la carcasse contre d'éventuelles agressions pouvant intervenir par la partie centrale de la bande de roulement, considérée comme la plus exposée. L'invention prévoit encore, dans le cas d'une couche d'éléments de renforcement de travail réalisée en plusieurs parties mises en place en différentes positions radiales, que la répartition de ces différentes parties ne soit pas réalisée de manière symétrique par rapport au plan équatorial, ou plan circonférentiel passant par le centre du sommet du pneumatique. Une telle répartition non symétrique peut en outre être liée à un choix de matériaux différents des éléments de renforcement des couches de travail.

Conformément à ce type de réalisation d'une couche d'éléments de renforcement de travail fractionnée en plusieurs parties, l'invention prévoit avantageusement un recouvrement des extrémités axiales desdites parties entre-elles.

D'autres détails et caractéristiques avantageux de l'invention ressortiront ci-après de la description des exemples de réalisation de l'invention en référence aux figures 1 à 5 qui représentent :
- figure 1, une vue méridienne d'un schéma d'un pneumatique selon un mode de réalisation de l'invention,
- figure 2a, une représentation schématique d'une couche de travail selon une première réalisation de l'invention,
- figure 2b, une représentation schématique d'une couche de travail selon une seconde réalisation de l'invention,
- figure 3, une vue méridienne d'un schéma d'un pneumatique selon un second mode de réalisation de l'invention,
- figure 4, une vue méridienne d'un schéma d'un pneumatique selon un troisième mode de réalisation de l'invention,
- figure 5, une vue méridienne d'un schéma d'un pneumatique selon un quatrième mode de réalisation de l'invention.

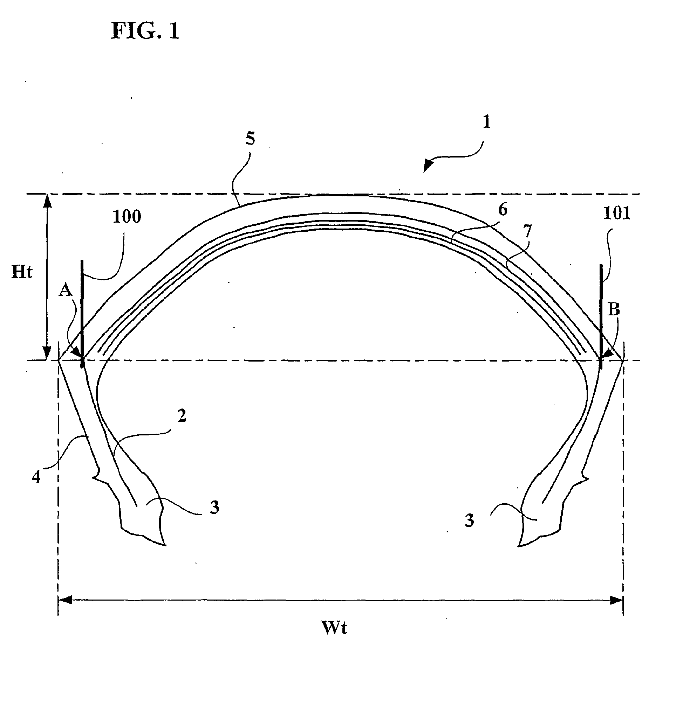

Les figures 1 à 5 ne sont pas représentées à l'échelle pour en simplifier la compréhension.

La figure 1 représente un pneumatique 1 comprenant une armature de carcasse constituée d'une seule couche 2 comprenant des éléments de renforcement de type textile. La couche 2 est constituée d'éléments de renforcement disposés radialement. Le positionnement radial des éléments de renforcement est défini par l'angle de pose desdits éléments de renforcement ; une disposition radiale correspond à un angle de pose desdits éléments par rapport à la direction longitudinale du pneumatique compris entre 65° et 90°.

Ladite couche de carcasse 2 est ancrée de chaque côté du pneumatique 1 dans un bourrelet 3 dont la base est destinée à être montée sur un siège de jante. Chaque bourrelet 3 est prolongé radialement vers l'extérieur par un flanc 4, ledit flanc 4 rejoignant radialement vers l'extérieur la bande de roulement 5. Le pneumatique 1 ainsi constitué présente une valeur de courbure supérieure à 0.15 et de préférence supérieure à 0.3. La valeur de courbure est définie par le rapport Ht/Wt, c'est-à-dire par le rapport de la hauteur de la bande de roulement sur la largeur maximale de la bande de roulement du pneumatique. La valeur de courbure sera avantageusement comprise entre 0.25 et 0.5 pour un pneumatique destiné à être monté à l'avant d'une motocyclette et elle sera avantageusement comprise entre 0.2 et 0.5 pour un pneumatique destiné à être monté à l'arrière.

Le pneumatique 1 comporte en outre sous la bande de roulement une armature de sommet constituée dans le cas présent de deux couches de travail 6, 7. Lesdites couches de travail 6, 7 sont, conformément à l'invention, positionnées radialement à l'intérieur de la partie de la couche de carcasse 2 radialement extérieure aux deux points de tangence A, B de l'abscisse curviligne de ladite couche de carcasse 2 avec les perpendiculaires 100, 101 à l'axe de rotation.

Une réalisation de ce type autorise comme évoqué précédemment un gain économique de deux ordres. Tout d'abord, la quantité de matière utilisée pour réaliser de telles couches d'éléments de renforcement de travail est diminuée du fait de la position radiale des couches 6 et 7 intérieure à la couche de carcasse 2 par rapport à un même pneumatique réalisés traditionnellement avec des couches de travail radialement extérieures à la carcasse. Et en conséquence, le temps de pose du fil de renforcement desdites couche 6 et 7 est également inférieur au temps nécessaire à la réalisation des couches traditionnelles précitées.

Les couches de travail 6, 7 sont constituées de renforts textiles réalisés selon l'invention avec au moins un fil continu de renforcement formant dans la zone centrale de ladite couche des tronçons parallèles et les tronçons adjacents étant reliés par des boucles. La disposition des fils est telle que les tronçons sont croisés d'une couche 6 à la couche 7 suivante.

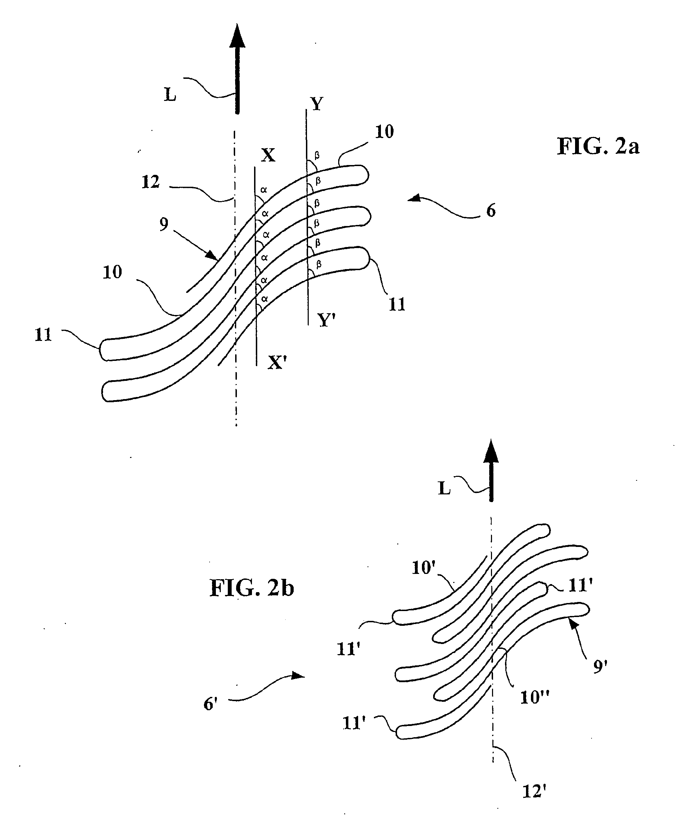

La figure 2a illustre un exemple de réalisation selon l'invention d'une telle couche de travail 6 constituée d'un seul fil 9 mis en place pour former des tronçons 10. Deux tronçons adjacents sont reliés par des boucles 11. L'orientation des tronçons 10 est telle qu'ils forment avec la direction longitudinale L un angle compris entre 10 et 80°. Sur cette représentation de la figure 2a les tronçons sont réalisés avec un angle variable de sorte qu'aux bords de la couche de travail 6, ledit angle devient plus important. Une telle variante de réalisation permet notamment de conférer une forte rigidité circonférentielle autour de l'équateur, c'est-à-dire dans la partie centrale du pneumatique où les angles desdits tronçons sont les plus petits pour résister à la centrifugation. Au contraire les angles les plus grands en bordure de couche de travail 6 et avantageusement au niveau des épaules permettent de favoriser l'adhérence et la motricité du pneumatique en carrossage en optimisant la rigidité de cisaillement des couches de travail lorsque l'angle se situe autour de 45° ou bien de favoriser le confort en carrossage lorsque l'angle approche 90°.

Sur la figure 2a sont également représentés deux plans circonférentiels de coupe XX' et YY' et les angles α et β formés par les éléments de renforcement avec la direction longitudinale aux différents points d'intersections avec lesdits plans circonférentiels XX' et YY'. Les angles α d'une part et β d'autre part sont identiques quel que soit l'élément de renforcement considéré. Par ailleurs, les angles α et β sont différents l'un de l'autre.

La figure 2a montre également lorsque la couche 6 est centrée sur le sommet ou équateur du pneumatique que l'équateur forme une ligne 12 comprenant les points d'inflexion des tronçons 10 formés par le fil 9.

La figure 2b illustre une autre variante de réalisation de l'invention proche de celle de la figure 2a selon laquelle la longueur des tronçons n'est pas régulière. Dans le cas de la figure 2b, le fil 9' est déposé pour former des tronçons 10', 10" de deux longueurs différentes. Une telle configuration permet d'obtenir des variations de densité selon la direction axiale, la quantité d'éléments de renforcement variant selon cette même direction. Des variations de densité de ce type sont d'autant plus intéressantes dans la conception de pneumatiques pour motocyclettes pour optimiser et adapter des rigidités différentes des couches de travail requises entre les positions ligne droite et les diverses positions inclinées du pneumatique du fait des parties différentes de la bande de roulement et de la structure de renforcement qui sont en regard avec le sol.

Dans le cas de la figure 2b, il est prévu deux longueurs de tronçons différentes mais l'invention ne doit pas être interprétée comme limitée à ce cas de figure, le nombre de longueurs différentes de tronçons pouvant être plus important.

Selon l'une ou l'autre des réalisations représentées sur les figures 2a et 2b, la réalisation des couches 6 et 6' est de préférence réalisée avec un seul fil. Toutefois pour différentes raisons, volontaires ou non, dans le cas ou plusieurs fils sont utilisés pour réaliser une couche de travail 6, 7, 6', 7', les extrémités desdits fils se trouvent dans la partie centrale du pneumatique. Plus précisément, aucune extrémité libre n'apparaît sur les bords des couches de travail ; seules sont présentes à ce niveau des couches de travail les boucles 11, 11'. Cette caractéristique de l'invention selon laquelle aucune extrémité libre des éléments de renforcement n'est présente sur les bords des couches de travail permet d'améliorer la qualité et plus particulièrement l'adhérence, la motricité, le confort, ou encore la température de fonctionnement des pneumatiques sans nuire aux différentes propriétés recherchées liées à la réalisation desdits pneumatiques.

Par ailleurs, concernant la mise en oeuvre de la réalisation d'un tel pneumatique, celle-ci est avantageusement obtenue par une fabrication du type sur noyau dur. Ainsi la pose des fils 9, 9' peut être réalisée par un automate qui vient les déposer précisément avec les angles voulus dans leur position quasi-finale. En effet, une fabrication du type sur noyau dur autorise un positionnement précis des fils car le noyau dur imposant la forme de la cavité intérieure requise, le profil du pneumatique ne subit pas de modification lors de la confection.

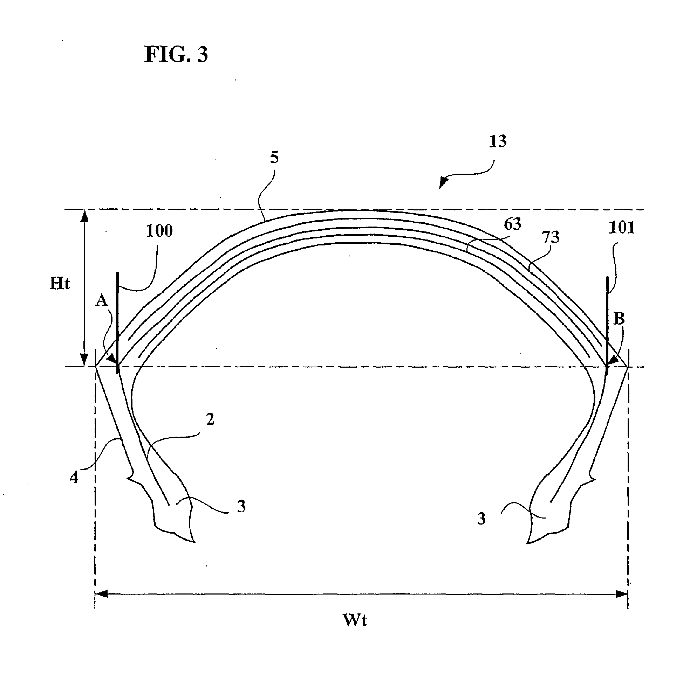

La figure 3 représente un pneumatique 13 qui est une variante de réalisation de la figure 1. Selon cette variante de réalisation, la couche de travail 63 est réalisée radialement à l'intérieur de la couche de carcasse 2 radialement recouverte de la couche de travail 73. La couche de travail 73 présente alors outre sa fonction première une fonction de protection, notamment pour la couche de carcasse 2.

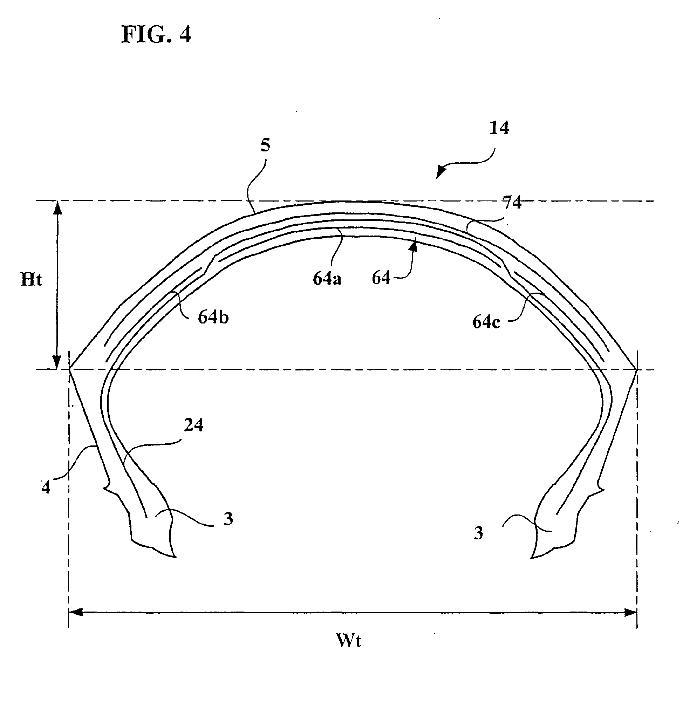

La figure 4 représente un mode de réalisation de l'invention selon lequel la couche de travail 64 est réalisée en plusieurs parties 64a, 64b, 64c mises en place sur le pneumatique 14 à des niveaux radialement différents. De telles réalisations permettent par exemple de conserver localement un rôle de protection de la couche de travail 64 notamment à l'égard de la nappe carcasse 24 et de diminuer par ailleurs les coûts de fabrication en réalisant partiellement ladite couche de travail 64 dans des positions radialement inférieures. Ce choix peut également influencer d'autres propriétés du pneumatique qui ne sont recherchées que localement. Dans le cas représenté sur la figure 4, la position des parties axialement extérieures 64b, 64c radialement à l'extérieur de la couche de carcasse 24 autorise notamment l'amélioration de la stabilité à forts carrossages. Le pneumatique comporte en outre une couche de travail 74 remplissant également une fonction de protection.

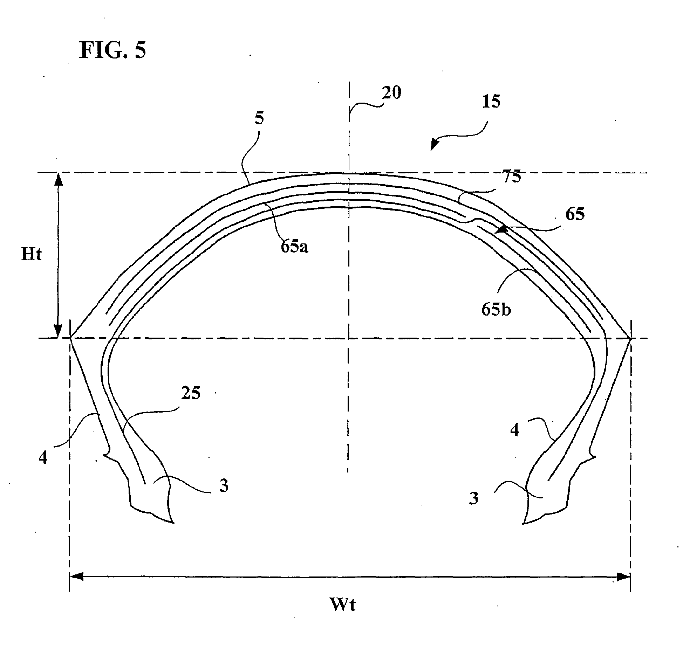

La figure 5 représente, comme dans le cas de la figure 4, un mode de réalisation de l'invention selon lequel la couche de travail 65 est réalisée en plusieurs parties 65a, 65b, mises en place sur le pneumatique 15 à des niveaux radialement différents. Contrairement au cas de la figure 4, la représentation faite sur cette figure 5 ne présente pas de symétrie par rapport au plan équatorial 20. Une telle réalisation peut notamment être recherchée lorsque l'usage du pneumatique 15 ne sera lui-même pas symétrique ; par exemple, dans le cas de pneumatiques devant être utilisés sur des circuits spécifiques sollicitant le pneumatique en carrossage selon essentiellement un côté. En effet, la réalisation d'un tel pneumatique peut notamment être intéressante pour un usage sur piste où la majorité des courbes ou virages sont dans la même direction.

Une telle réalisation de la couche de travail 65 en plusieurs parties peut encore être combinée à la présence d'une seconde couche de travail 75 radialement à l'extérieur de la couche de carcasse 25, notamment pour renforcer la fonction de protection de la couche de carcasse 25.

## Revendications

1. Pneumatique (1) comportant une structure de renfort de type carcasse continue (2), formée d'éléments de renforcement, ancrée de chaque côté du pneumatique à un bourrelet (3) dont la base est destinée à être montée sur un siège de jante, chaque bourrelet (3) se prolongeant radialement vers l'extérieur par un flanc (4), les flancs (4) rejoignant radialement vers l'extérieur une bande de roulement (5), et comportant sous la bande de roulement une structure de renforcement de sommet constituée d'au moins une couche d'éléments de renforcement dite couche de travail (6, 7), ladite structure de renforcement de sommet ne comportant pas d'éléments de renforcement orientés circonférentiellement, selon le profil du pneumatique dans un plan radial, dans sa partie radialement extérieure aux deux points de tangence (A, B) de l'abscisse curviligne de la structure de renfort de type carcasse (2) avec des perpendiculaires (100, 101) à l'axe de rotation, au moins une couche d'éléments de renforcement de travail (6, 7) étant au moins partiellement radialement intérieure à la partie de la structure de renfort de type carcasse (2) radialement extérieure aux deux points de tangence (A, B) de l'abscisse curviligne de la structure de renfort de type carcasse (2) avec des perpendiculaires (100, 101) à l'axe de rotation, **caractérisé en ce que** ladite couche d'éléments de renforcement de travail (6, 7) est constituée d'au moins un fil continu de renforcement (9) formant dans la zone centrale de ladite couche des tronçons (10) présentant des angles (α, β), formés avec la direction longitudinale, identiques, lesdits angles étant mesurés aux points d'intersections avec un plan circonférentiel (XX', YY'), **en ce que** deux tronçons (10) adjacents sont liés par une boucle (11), et **en ce que** les tronçons (10) forment un angle avec la direction longitudinale compris entre 10 et 80°.

2. Pneumatique (1) selon la revendication 1, **caractérisé en ce que** dans la zone centrale de ladite couche les tronçons (10) sont équidistants les uns des autres selon tous plans circonférentiels.

3. Pneumatique (1) selon la revendication 1 ou 2, **caractérisé en ce que** les angles (α, β) formés par lesdits tronçons (10) avec la direction longitudinale sont variables selon la direction transversale et **en ce que** lesdits angles (α, P) sont supérieurs sur les bords axialement extérieurs des couches (6, 7) d'éléments de renforcement par rapport aux angles (α, P) desdits tronçons (10) mesurés au niveau du plan équatorial du pneumatique.

4. Pneumatique (1) selon la revendication 3, **caractérisé en ce que** les angles (α, β) des tronçons (10) varient d'une manière monotone depuis le plan équatorial du pneumatique jusqu'aux bords de la couche de travail (6, 7).

5. Pneumatique (1) selon la revendication 3, **caractérisé en ce que** les angles (α, β) des tronçons (10) varient par palier depuis le plan équatorial du pneumatique jusqu'aux bords de la couche de travail (6, 7).

6. Pneumatique (1) selon la revendication 1 à 5, **caractérisé en ce que** la structure de renforcement de sommet comporte au moins deux couches (6, 7) d'éléments de renforcement et **en ce que** d'une couche à la suivante les tronçons (10) forment entre eux des angles compris entre 20 et 160°.

7. Pneumatique (1) selon l'une des revendications 1 à 6, **caractérisé en ce que** les éléments de renforcement de la structure de renfort de type carcasse (2) font avec la direction circonférentielle un angle compris entre 65° et 90°.

8. Pneumatique (1) selon l'une des revendications 1 à 7, **caractérisé en ce que** les éléments de renforcement des couches de travail (6, 7) sont en matériau textile.

9. Pneumatique (1) selon l'une des revendications 1 à 7, **caractérisé en ce que** les éléments de renforcement des couches de travail (6, 7) sont en métal.

10. Utilisation d'un pneumatique (1) tel que décrit selon l'une des revendications 1 à 9 pour un véhicule motorisé à deux roues tel qu'une motocyclette.

## Claims

1. A tyre (1) comprising a continuous carcass-type reinforcement structure (2), formed of reinforcement elements and anchored on each side of the tyre to a bead (3) whose base is intended to be fitted on a rim seat, each bead (3) being extended radially towards the outside by a sidewall (4), the sidewalls (4) meeting up radially towards the outside with a tread (5), and comprising under the tread a crown reinforcement structure consisting of at least one layer of reinforcement elements known as a working layer (6, 7), said crown reinforcement structure not comprising any circumferentially oriented reinforcement elements, over the profile of the tyre in a radial plane, in its part radially to the outside of the two points of tangency (A, B) of the curvilinear abscissa of the carcass-type reinforcement structure (2) with perpendiculars (100, 101) to the axis of rotation, at least one working layer (6, 7) of reinforcement elements is at least partially radially to the inside of the part of the carcass-type reinforcement structure (2) radially to the outside of the two points of tangency (A, B) of the curvilinear abscissa of the carcass-type reinforcement structure (2) with perpendiculars (100, 101) to the axis of rotation, **characterised in that** said working layer (6, 7) of reinforcement elements consists of at least one continuous reinforcement cord (9) forming in the central zone of said layer portions (10) having identical angles (α, β) formed with the longitudinal direction, said angles being measured at the points of intersection with a circumferential plane (XX', YY'), **in that** two adjacent portions (10) are linked by a loop (11), and **in that** the portions (10) form an angle with the longitudinal direction of between 10 and 80°.

2. A tyre (1) according to Claim 1, **characterised in that,** in the central zone of said layer, the portions (10) are equidistant from one another over all circumferential planes.

3. A tyre (1) according to Claim 1 or 2, **characterised in that** the angles (α, β) formed by said portions (10) with the longitudinal direction are variable in the transverse direction and **in that** said angles (α, β) are greater at the axially outer edges of the layers (6, 7) of reinforcement elements relative to the angles (α, β) of said portions (10) measured at the level of the equatorial plane of the tyre.

4. A tyre (1) according to Claim 3, **characterised in that** the angles (α, β) of the portions (10) vary in monotonic manner from the equatorial plane of the tyre as far as the edges of the working layer (6, 7).

5. A tyre (1) according to Claim 3, **characterised in that** the angles (α, β) of the portions (10) vary by stages from the equatorial plane of the tyre as far as the edges of the working layer (6, 7).

6. A tyre (1) according to Claims 1 to 5, **characterised in that** the crown reinforcement structure comprises at least two layers (6, 7) of reinforcement elements and **in that** from one layer to the next the portions (10) form between them angles of between 20 and 160°.

7. A tyre (1) according to one of claims 1 to 6, **characterised in that** the reinforcement elements of the carcass-type reinforcement structure (2) form an angle of between 65° and 90° with the circumferential direction.

8. A tyre (1) according to one of claims 1 to 7, **characterised in that** the working layer (6, 7) reinforcement elements are of textile material.

9. A tyre (1) according to one of claims 1 to 7, **characterised in that** the working layer (6, 7) reinforcement elements are of metal.

10. Use of a tyre (1) as described according to one of claims 1 to 9 for a two-wheeled motorised vehicle such as a motorcycle.

## Patentansprüche

1. Luftreifen (1), der eine von Verstärkungselementen gebildete Stützstruktur vom Typ durchgehende Karkasse (2) aufweist, die auf jeder Seite des Luftreifens an einem Wulst (3) verankert ist, dessen Basis dazu bestimmt ist, auf einen Felgensitz montiert zu werden, wobei jeder Wulst (3) sich radial nach außen durch eine Flanke (4) verlängert, wobei die Flanken (4) radial nach außen an eine Lauffläche (5) anschließen, und unter der Lauffläche eine Scheitelverstärkungsstruktur aufweist, die aus mindestens einer Schicht von Verstärkungselementen besteht, Arbeitsschicht (6, 7) genannt, wobei die Scheitelverstärkungsstruktur gemäß dem Profil des Luftreifens in radialer Ebene keine in Umfangsrichtung ausgerichteten Verstärkungselemente in ihrem Bereich radial außen bezüglich der zwei Tangentenpunkte (A, B) der gekrümmten Abszisse der Stützstruktur vom Typ Karkasse (2) mit Lotrechten (100, 101) zur Drehachse aufweist, wobei mindestens eine Schicht von Arbeitsverstärkungselementen (6, 7) sich zumindest teilweise radial innen bezüglich des Bereichs der Stützstruktur vom Typ Karkasse (2) radial außen bezüglich der zwei Tangentenpunkte (A, B) der gekrümmten Abszisse der Stützstruktur vom Typ Karkasse (2) mit Lotrechten (100, 101) zur Drehachse befindet, **dadurch gekennzeichnet, dass** die Schicht von Arbeitsverstärkungselementen (6, 7) aus mindestens einem durchgehenden Verstärkungsdraht (9) besteht, der in der zentralen Zone der Schicht Abschnitte (10) formt, die gleiche mit der Längsrichtung gebildete Winkel (α, β) haben, wobei die Winkel an den Schnittpunkten mit einer Umfangsebene (XX', YY') gemessen werden, dass zwei benachbarte Abschnitte (10) durch eine Schleife (11) verbunden sind, und dass die Abschnitte (10) einen Winkel mit der Längsrichtung bilden, der zwischen 10 und 80° liegt.

2. Luftreifen (1) nach Anspruch 1, **dadurch gekennzeichnet, dass** die Abschnitte (10) in der zentralen Zone der Schicht in allen Umfangsebenen den gleichen Abstand zueinander haben.

3. Luftreifen (1) nach Anspruch 1 oder 2, **dadurch gekennzeichnet, dass** die von den Abschnitten (10) mit der Längsrichtung gebildeten Winkel (α, β) in der Querrichtung variabel sind, und dass die Winkel (α, β) an den axial äußeren Rändern der Schichten (6, 7) von Verstärkungselementen bezüglich der Winkel (α, β) der Abschnitte (10) größer sind, die in Höhe der Äquatorialebene des Luftreifens gemessen werden.

4. Luftreifen (1) nach Anspruch 3, **dadurch gekennzeichnet, dass** die Winkel (α, β) der Abschnitte (10) von der Äquatorialebene des Luftreifens bis zu den Rändern der Arbeitsschicht (6, 7) gleichförmig variieren.

5. Luftreifen (1) nach Anspruch 3, **dadurch gekennzeichnet, dass** die Winkel (α, β) der Abschnitte (10) von der Äquatorialebene des Luftreifens bis zu den Rändern der Arbeitsschicht (6, 7) in Stufen variieren.

6. Luftreifen (1) nach Anspruch 1 bis 5, **dadurch gekennzeichnet, dass** die Scheitelverstärkungsstruktur mindestens zwei Schichten (6, 7) von Verstärkungselementen aufweist, und dass die Abschnitte (10) von einer Schicht zur nächsten Winkel zwischen 20 und 160° miteinander bilden.

7. Luftreifen (1) nach einem der Ansprüche 1 bis 6, **dadurch gekennzeichnet, dass** die Verstärkungselemente der Stützstruktur vom Typ Karkasse (2) mit der Umfangsrichtung einen Winkel zwischen 65° und 90° bilden.

8. Luftreifen (1) nach einem der Ansprüche 1 bis 7, **dadurch gekennzeichnet, dass** die Verstärkungselemente der Arbeitsschichten (6, 7) aus Textilwerkstoff sind.

9. Luftreifen (1) nach einem der Ansprüche 1 bis 7, **dadurch gekennzeichnet, dass** die Verstärkungselemente der Arbeitsschichten (6, 7) aus Metall sind.

10. Verwendung eines Luftreifens (1), wie er gemäß einem der Ansprüche 1 bis 9 beschrieben ist, für ein zweirädriges Motorfahrzeug wie ein Motorrad.
